# EUROPEAN PATENT APPLICATION

(11) **EP 4 283 837 A2**
(43) Date of publication of application: **29.11.2023**
(21) Application number: 23174884.9
(22) Date of filing: 23.05.2023
(51) Int. Cl.: H02K 1/27, H02K 99/00

(54) **CO-POLAR MAGNET GENERATOR**

(30) Priority: 23.05.2022 TR 202208351
(71) Applicant: Dursun, Yilmaz, 28870 Ottersberg (DE)
(72) Inventor: Dursun, Yilmaz, 28870 Ottersberg (DE)
(74) Representative: Berkkam, Ayfer

(57) **Abstract**

The aim of this invention is to minimize the magnetic forces with co-polar magnets and to minimize the mechanical force (2) applied to the rotor (5).

## Description

### Technical Field

This invention is to minimize magnetic forces by placing co-polar magnets opposite each other and to minimize the mechanical force applied to the rotor.

### Prior art

In the patent document with application number 2020/18633, which is in the known state of the art; a dynamo / generator with at least one rotor shaft, an outer rotor and an internal stator bearing at the same center as the said rotor shaft, which transfers the energy received from the battery and gives motion energy while generating energy independent of the battery is described. It includes an outer rotor fixed at the same center as said rotor shaft, which creates rotational motion with the rotor shaft and whose outer surface is equipped with a magnet layer, an inner stator positioned independently between said outer rotor and the rotor shaft, and at least one outer generator stator that surrounds said outer rotor from the outside and acts as a generator.

In the patent document numbered 2018/15325, which is in the known state of the art, a power plant with a generator including a stator and rotor rotating in the opposite direction to each other is described. It is characterized by the rotor generator linear gear and the stator generator linear gear positioned in the opposite direction relative to each other relative to the generator axis consisting of the rotor shaft and the stator shaft, the rotor generator wheel and the stator generator wheel in contact with said rotor generator linear gear and the stator generator linear gear and having an opposite rotational movement relative to each other, at least one carrier motor that enables the mechanism to be lifted up by means of the motor linear gear, sensor groups that detect the position of the mechanism, a battery and/or power supply and/or power grid that provides the electrical energy required by the system, a brush-ring system to draw out the electricity generated in said generator, a control unit that controls the acceleration, deceleration and stopping actions of the mechanism whose position is determined by the mechanism phase output and sensor groups, and a motor drive circuit with a carrier motor that performs the aforementioned actions.
Split-Pole Generator with Application No. 2021/011438

Coil: A coil is formed by winding copper wire. As a result of applying direct current (DC) to the coil from outside, the rotor poles are magnetized and an electro magnet is obtained. The rotor poles in front of the coil are polarized north and the poles on the back are polarized south. The coil is fixed to the main body with the stator. There is a 10 mm gap between the rotor and the coil. The task of the coil is to magnetize the rotor.

Rotor: The moving part (rotating part) in the system is the magnetized iron cylinder part. On the rotor, there are 3 protruding rotor poles placed equally on 360 at an angle of 120 degrees. Cylinder rotor poles are located at the front and back of the coil. There is a coil in the center. There is an angle of 45 degrees on the axis between the rotor pole protrusions at the front and rear poles. The rotor poles at the front of the coil are polarized north and the poles at the back are polarized south. Thanks to the 45-degree angle, the Stator poles at the front are polarized north, while the Stator poles at the back are not polarized. After rotating at a 45-degree angle, it will be polarized as south. When it is polarized as south, the Stator poles at the front are not polarized as north.

Stator: The stator poles are fixed iron parts with electric wires wrapped around the outside. The stator poles are placed at an angle of 120 degrees on the axis of the rotor and the stator poles in front and behind the coil are placed at the same angle. The stator poles at the top and bottom are in the same alignment. The electro magnet (north) formed between the gaps (poles) between the 3 rotor poles in the front is polarized as (north) by magnetizing the stator poles with the 360-degree movement of the rotor. The electro magnet (south) formed between the gaps (poles) between the 3 rotor poles at the rear is polarized as (south) by magnetizing the stator poles with the 360-degree movement of the rotor. With the rotation of the rotor, the stator poles in front and behind are alternately polarized successively. In this way, the electrical energy generated by the magnetic flux created on the copper wires wound on the stator poles is converted into electrical energy. The amount of direct electric (DC) current supplied to the coil placed between the poles of the rotor determines the amount of magnetization of the poles on the front and back of the coil. It is continued until the magnetization of the stator poles reaches the saturation point. Once the saturation point is reached, the magnetic force between the poles is minimized and the force used externally to rotate the rotor is minimized.

### Objectives and Short Description of Invention

Rotor (5): It is the moving cylinder iron part (rotating part) in the system. On the rotor (5), there are 4 protruding rotor poles (6) placed on the y and x axes (15,14) with an angle of 90 degrees on 360 degrees. The cylinder rotor (5) is fixed on the rotor shaft (12) by means of rotor connection irons (13) in order to minimize the weight, and the cylinder rotor (5) is hollowed out and fixed on the rotor shaft (12). Rotor poles (6) are located in the center of the cylinder rotor (5). The center of the rotor poles (6) extends outwardly in the middle of the cylinder as a slit. Rotor pole (6) protrusions are fixed by gluing neodymium magnets on both sides of the rotor poles (6) in such a way that the north pole (3) faces the north pole (3) (N, N) and the south pole (4) faces the south pole (4) (S, S). Neodymium magnets are glued to the rotor poles on the y-axis (15) with north pole (3) and to the rotor poles on the x-axis (14) with south pole (4).

Stator (7): stator poles (8) are fixed iron parts and electric wires (11) are wrapped around the outside. With the 360-degree movement of the rotor (5), the stator poles (8) are magnetized and polarized. In this way, the magnetic flux is converted into electrical energy in the coils. The magnetic flux between the poles (6) of the rotor determines the amount of magnetization of the stator poles (8). It is ensured that the magnetization of the stator poles (8) reaches the saturation point. As soon as the saturation point is reached, the magnetic force between the poles (6) is minimized and the mechanical force (2) applied to rotate the rotor is minimized.

### Detailed Description of the Invention

The details of the "co-polar magnet generator" realized to achieve the purpose of the invention are shown in the attached figures, and the parts and sections in these figures are numbered and their equivalents are shown in the attached figures.

These figures are;
Figure-1 Co-polar magnet generator perspective view
Figure-2 Co-polar magnet generator front view
Figure-3 Co-polar magnet generator top view
Figure-4 Co-polar magnet generator rotor pole top view
Figure-5 Co-polar magnet generator stator top view

The parts in the figures are numbered one by one and the equivalents of these numbers are given below.
1-Generator
2- Mechanical force
3- North pole
4- South pole
5- Rotor
6- Rotor pole
7- Stator
8- Stator pole
9- Stator winding copper wires positive connection point
10- Stator winding copper wires negative connection point
11- Stator winding copper wires
12- Rotor shaft
13- Rotor connection bars
14- X axis
15- Y axis

The invention concerns a split-pole generator (1) and consists of the parts
- Generator (1)
- Mechanical force (2) used externally to rotate the rotor (5) (F)
- Magnet north pole (3) (N)
- Magnet south pole (4) (S)
- Rotor (5)
- Rotor poles (6)
- Stator (7)
- Stator poles (8)
- Stator winding copper wires positive connection point (9) (+)
- Stator winding copper wires negative connection point (10) (-)
- Stator winding copper wires (11)
- Rotor shaft (12)
- Rotor connecting bars (13)
- X axis (14)
- Y axis (15).

Rotor (5): It is the moving cylinder iron part (rotating part) in the system. On the rotor (5), there are 4 protruding rotor poles (6) placed on the y and x axes (15,14) with an angle of 90 degrees on 360 degrees. The cylinder rotor (5) is fixed on the rotor shaft (12) by means of rotor connection irons (13) in order to minimize the weight, and the cylinder rotor (5) is hollowed out and fixed on the rotor shaft (12). Rotor poles (6) are located in the center of the cylinder rotor (5). The center of the rotor poles (6) extends outwardly in the middle of the cylinder as a slit. Rotor pole (6) protrusions are fixed by gluing neodymium magnets on both sides of the rotor poles (6) in such a way that the north pole (3) faces the north pole (3) (N, N) and the south pole (4) faces the south pole (4) (S, S). Neodymium magnets are glued to the rotor poles (15) on the y-axis (6) with north pole (3) and to the rotor poles (14) on the x-axis (6) with south pole (4).

Stator (7): stator poles (8) are fixed iron parts and electric wires (11) are wrapped around their outer parts. With the 360-degree movement of the rotor (5), the stator poles (8) are magnetized and polarized. In this way, the magnetic flux is converted into electrical energy in the coils. The magnetic flux between the poles (6) of the rotor determines the amount of magnetization of the stator poles (8). It is ensured that the magnetization of the stator poles (8) reaches the saturation point. As soon as the saturation point is reached, the magnetic force between the poles (6) is minimized and the mechanical force (2) applied to rotate the rotor (5) is minimized.

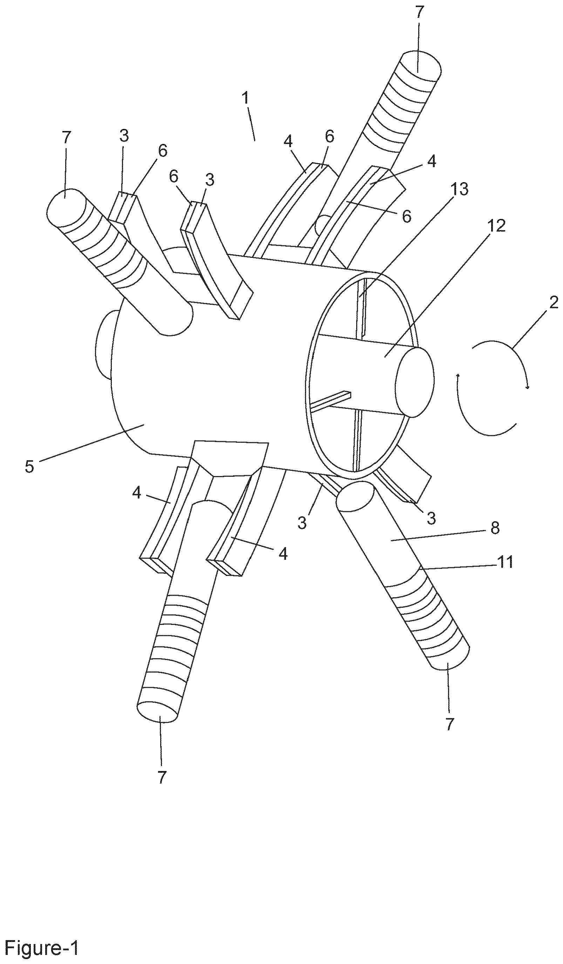

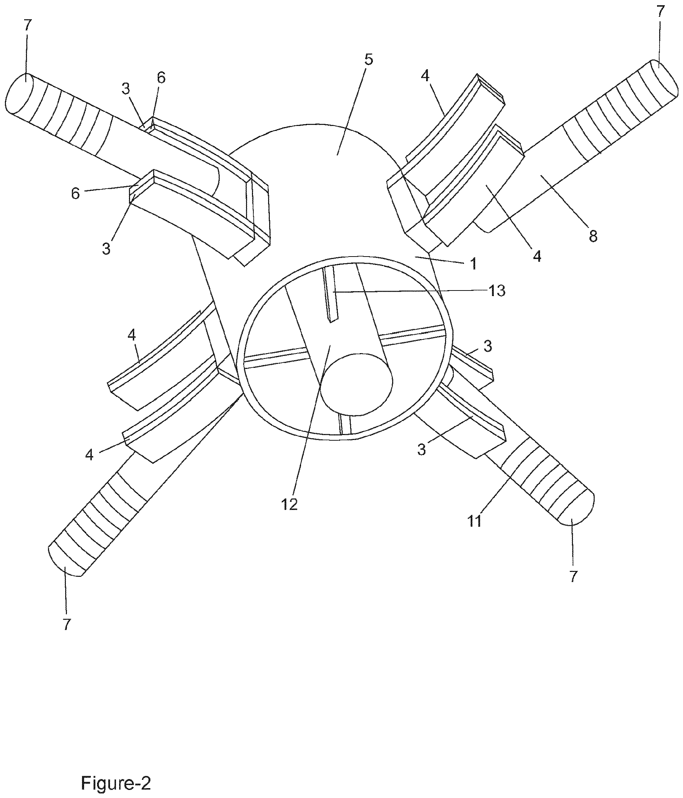

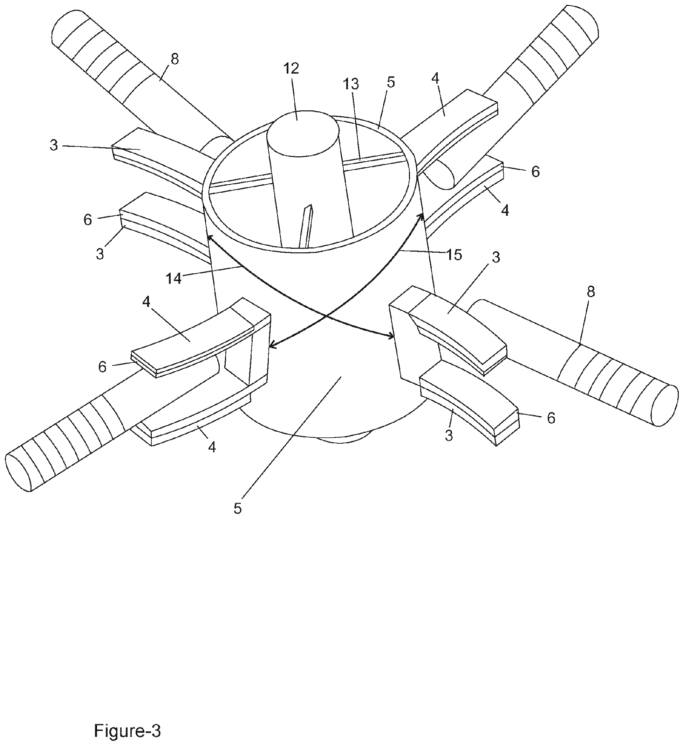

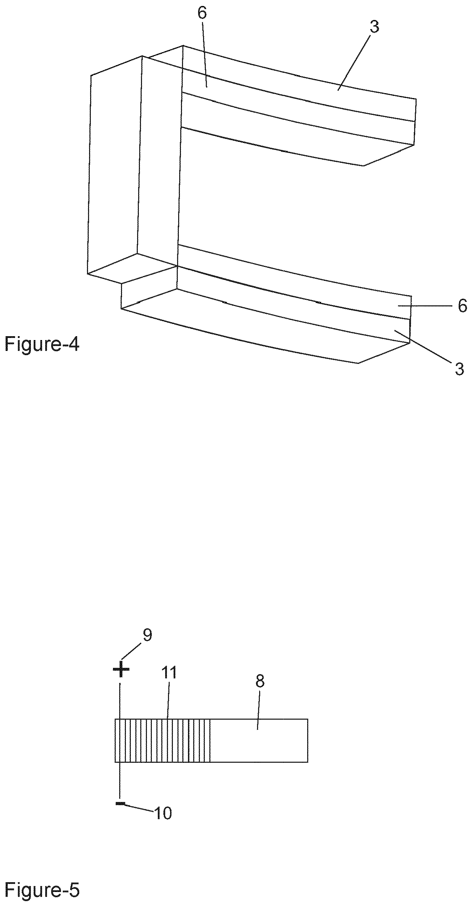

## Claims

1. The invention concerns a co-polar magnet generator (1) and **characterized by** comprising the parts,
- Generator (1)
- Mechanical force (2) used externally to rotate the rotor (5)
- Magnet north pole (3) (N)
- Magnet south pole (4) (S)
- Rotor (5)
- Rotor poles (6)
- Stator (7)
- Stator poles (8)
- Stator winding copper wires positive connection point (9) (+)
- Stator winding copper wires negative connection point (10) (-)
- Stator winding copper wires (11)
- Rotor shaft (12)
- Rotor connecting bars (13)
- X axis (14)
- Y axis (15).

2. The invention concerns a co-polar magnet generator (1) according to claim 1, **characterized by** rotor pole projections (6) with neodymium magnets glued on both sides thereof in such a way that the north pole (3) faces the north pole (3) (N, N) and the south pole (4) faces the south pole (4) (S, S), and by the rotor poles (6) on the y-axis (15) and with rotor poles (6) on the y-axis (3), Neodymium magnets, where the rotor poles (6) are magnetized as north pole (3) and south pole (4) between the x-axis (14) and y-axis (15) by attaching the north pole (3) directions to the rotor poles (6) on the y-axis (15) and the south pole (4) directions to the rotor poles (6) on the x-axis (14).

3. A co-polar magnet generator (1) according to claim 1, wherein the amount of magnetization of the stator poles (8) is determined by the magnetic flux between the rotor poles (6), wherein the magnetization of the stator poles (8) reaches a saturation point, and wherein the magnetic force between the poles (6) is minimized as soon as the saturation point is reached, so that the mechanical force (2) applied to rotate the rotor (5) is minimized.
